# EUROPÄISCHE PATENTSCHRIFT

(11) **EP 0 905 592 B1**
(45) Veröffentlichungstag und Bekanntmachung des Hinweises auf die Patenterteilung: **11.05.2005**
(21) Anmeldenummer: 98117621.7
(22) Anmeldetag: 17.09.1998
(51) Int. Cl.: G05B 19/401

(54) **Verfahren zur Einstellung der Endlagen von einem durch einen Elektromotor angetriebenen Stellantrieb**
Method for adjusting the stop positions of an actuator driven by an electric motor
Procédure pour ajuster la position finale d'un actionneur, entrâiner par un moteur électrique

(30) Priorität: 20.09.1997 DE 19741620
(43) Veröffentlichungstag der Anmeldung: 31.03.1999
(73) Patentinhaber: SOMFY Feinmechanik und Elektrotechnik GmbH, 72108 Rottenburg (DE)
(72) Erfinder: Kaiser, Norbert, 70567 Stuttgart (DE); Tobias, Ralhp, 76534 Baden-Baden (DE); Buehner, Peter, 71679 Asperg (DE); Grabandt, Peter, 71686 Remseck (DE)
(74) Vertreter: Jakelski, Joachim, Dr.

(56) Entgegenhaltungen:
- DE-A- 3 933 266
- DE-C- 19 523 210
- GRUNDIG AG: "Satellite-TV-Receiver STR 300 AP" GRUNDIG-GEBRAUCHSANWEISUNG, - 1991 XP002091932

## Beschreibung

### Stand der Technik

Die Erfindung geht aus von einem Verfahren zur Einstellung der Endlagen von einem durch einen Elektromotor angetriebenen Stellantrieb, insbesondere für ein Garagentor, gemäß der im Oberbegriff des Anspruchs 1 definierten Gattung.

Bei einem aus der EP 0 544 135 B1 bekannten Verfahren dieser Art wird eine Wegmessung für die elektrisch angetriebene Stellbewegung vorgenommen und die Wegpunkte für die Endlagen werden an den Stellen abgespeichert, an denen der Stellantrieb in einer einmaligen Einlernfahrt gegen die Endanschläge des Stellbereichs fährt und durch eine Überlastabschaltung abgeschaltet wird. Über einen Schalter wird zwischen Lernfahrt und Normalbetrieb unterschieden. Nachteilig bei diesem Verfahren ist die Tatsache, daß bei jedem normalen Stellvorgang der Antrieb in jeder Endlage unter Spannung steht, da er bis in die durch die Endanschläge vorgebende Position verfahren wird. Es stimmen ja hier die Endlage und der Endanschlag, an dem der Antrieb durch die Überlastabschaltung abgeschaltet würde, miteinander überein. Weiterhin ist als nachteilig anzusehen, daß bei diesem bekannten Stellantrieb keine Möglichkeit gegeben ist, die vom Antrieb selbst gewählten Endpunkte manuell zu beeinflussen.

Vorliegende Erfindung verfolgt den Zweck, die Endlageneinstellung bei Stellantrieben, insbesondere bei solchen für Garagentorantriebe, erheblich zu vereinfachen und durch Einsparung von Endschaltern einen kostengünstigen Stellantrieb zur Verfügung stellen zu können, der trotzdem ein Höchstmaß an Komfort und Sicherheit bietet.

Gegenüber dem bekannten Stand der Technik liegt die Aufgabe der Erfindung darin, die Endlageneinstellung so zu gestalten, daß unnötige mechanische und elektrische Belastung der Komponenten vermieden werden.

### Vorteile der Erfindung

Das erfindungsgemäße Verfahren mit den kennzeichnenden Merkmalen des Anspruchs 1, hat gegenüber dem bekannten Stand der Technik den entscheidenden Vorteil, daß eine erhebliche Reduzierung der mechanischen und elektrischen Belastung des Motors und seiner mechanischen Komponenten ermöglicht. Dies wird generell bei erheblicher Reduzierung der Kosten des Gesamtsystems erreicht.

Gemäß der Erfindung ist prinzipiell bei dem Verfahren zur Einstellung der Endlagen von einem durch einen Elektromotor angetriebenen Stellantrieb, insbesondere für ein Garagentor, vorgesehen, daß der Motor nach dem lastabhängigen Anhalten an zumindest dem einen Endanschlag um eine gewisse Wegstrecke in umgekehrter Richtung zur Festlegung der Endlage zurückgefahren wird, und daß dieser dann erreichte Lagewert als Endlage abgespeichert wird.

Durch die in den weiteren Ansprüchen niedergelegten Maßnahmen sind vorteilhafte Weiterbildungen und Verbesserungen des im Anspruch 1 angegebenen Verfahrens zur Einstellung der Endlagen des durch einen Elektromotor angetriebenen Stellantriebs möglich.

Gemäß einer besonders vorteilhaften Ausführungsform des erfindungsgemäßen Verfahrens wird das Zurückfahren an beiden Endanschlägen durchgeführt. Dadurch werden in beiden Endstellungen, die vom Stellantrieb angefahren werden, die optimalen Werte sichergestellt.

Gemäß einer weiteren besonders vorteilhaften Ausführungsform des erfindungsgemäßen Verfahrens ist vorgesehen, daß die nach dem Zurückfahren erreichten Werte für die Endlage manuell bestätigt werden. In zweckmäßiger Weiterbildung sind die nach dem Zurückfahren erreichten Werte für die Endlage manuell korrigierbar. Dadurch können die Endlagen immer optimal auf die Mechanik des Stellantriebs abgestimmt werden.

In weiterer zweckmäßiger Ausgestaltung des erfindungsgemäßen Verfahrens wird eine Neueinstellung der Endlage bei Verlust der Selbstkorrektur der Wegstreckenmessung vorgenommen, wozu das Anfahren an einen Endanschlag durchgeführt wird. Eine Neueinstellung der Endlage kann auch dann vorgenommen werden, wenn bei Erkennung eines Hindernisses und entsprechendem Umsteuern eine Neujustage erforderlich ist. Auch dies wird mittels des gezielten Anfahrens eines Endanschlags durchgeführt. Dadurch erhält die Wegstreckenmessung wieder den benötigten Referenzpunkt.

Gemäß einer besonders zweckmäßigen Ausgestaltung der Erfindung ist die Wegstreckenmessung mit einem rotierenden Inkrementalgeber versehen, der neben den Wegzählsignalen bei jeder Umdrehung zumindest ein sich davon unterscheidendes Referenzsignal abgibt.

In zweckmäßiger Weiterbildung dieser Ausgestaltung der Erfindung weisen bei mehreren Referenzsignalen die einzelnen Referenzsignale signifikante Unterschiede auf, insbesondere unterschiedliche Länge. In vorteilhafter Anwendung können aus mehreren Referenzsignalen Informationen über die Drehrichtung ermittelt werden.

### Beschreibung der Ausführungsbeispiele

Die Erfindung geht aus von einem Stellantrieb, der durch einen Elektromotor angetriebenen wird und insbesondere für das Öffnen und Schließen eines Garagentores vorgesehen ist. Der Stellantrieb umfaßt eine inkrementale Wegstreckenmessung, um den Motor bei Erreichen der eingestellten Endlagen abzuschalten. Weiterhin ist eine Überlastabschaltung vorgesehen, die den Motor immer dann abschaltet, wenn eine Situation auftritt, in welcher der Motor so stark belastet ist, daß entweder er oder ein Teil des Stellantriebs oder ein ein Hindernis bildendes Teil Schaden nehmen könnte. Der Stellantrieb fährt zwischen zwei Endstellungen, beispielsweise der geöffneten und der geschlossen Stellung des Garagentores hin und her. Die vorgesehene Wegstreckenmessung und die in der Steuerung eingestellten Werte der Endlagen bestimmen dabei den Weg des Stellantriebs.

Gemäß dem Verfahren nach der Erfindung wird der Motor zur Findung und Einstellung der Endlage in die entsprechende Richtung bis zum Endanschlag verfahren. Bei dieser Einlernfahrt wird der Motor nach dem lastabhängigen Anhalten durch die Überlastabschaltung an zumindest dem einen Endanschlag um eine gewisse Wegstrecke in umgekehrter Richtung zur Festlegung der Endlage zurückgefahren. Dieser dann erreichte Lagewert wird als Endlage abgespeichert. Die Wegstrecke, um die bei der Einlernfahrt zurückgefahren wird, kann bei einem Garagentorantrieb beispielsweise ca. 5 cm betragen. Es ist klar, daß dieser Wert je nach Verwendung des Stellantriebs optimal zu wählen ist. Nach dem die Festlegung der einen Endlage auf diese erfindungsgemäße Art erfolgt ist, wird anschließend auch die zweite Endlage in dieser Art bestimmt und festgelegt.

Diese Einlernfahrt gegen einen oder jeden der beiden Endanschläge, wobei die mechanischen Endanschläge gemeint sind, wird bei der ersten Inbetriebnahme des Stellantriebs durchgeführt. Durch das erfindungsgemäß vorgesehene Zurückfahren von dem Überlastpunkt wird gewährleistet, daß die mechanischen Endanschläge nur dabei angefahren werden. Dies schont alle beteiligten Komponenten erheblich.

Eine Einlernfahrt gegen nur einen, und dann meist nur einen ganz bestimmten Endanschlag, beispielsweise den Endanschlag in der geöffneten Stellung eines Garagentores, kann auch immer dann erneut durchgeführt werden, wenn ein Nothalt wegen eines Hindernisses und der daraufhin eventuell erfolgenden schnellen Richtungsumkehr aufgetreten ist, oder dann, wenn in der Wegstreckenmessung nach Verlust der Selbstkorrektur nicht mehr korrigierbare Zählfehler aufgetreten sind.

Entsprechend vorteilhafter Ausgestaltung kann die Einspeicherung der Endlagen durch eine Programmiertaste manuell von dem Einbauer bestätigt werden. Es kann gegebenenfalls auch eine manuelle Korrektur des jeweiligen Wertes für die angefahrene Endlage erfolgen, um damit eine optimale Anpassung an die individuellen Verhältnisse des Tor- bzw. Stellantriebs sicherzustellen.

Entsprechend einer besonderen Ausführungform der Erfindung ist in der Wegstreckenmessung ein rotierender Inkrementalgeber vorgesehen. Mit seiner Hilfe werden die erfindungsgemäß ermittelten und einprogrammierten Endlagen im Betrieb zuverlässig angefahren.

Vorteilhaft wird ein Inkrementalgeber eingesetzt, der neben den Wegstreckensignalen auch zumindest ein Referenzsignal abgibt. Damit können eventuell fehlerhaft eingelesene Signale des Inkrementalgebers korrigiert werden. Möglich ist auch der Einsatz eines Inkrementalgebers, welcher mehrere Referenzsignale abgibt. Diese können signifikante Unterschiede aufweisen und sich dann beispielsweise durch ihre unterschiedliche Impulslänge unterscheiden. Mit solchen verschiedenen Referenzsignalen kann die Drehrichtung des den Stellantrieb antreibenden Elektromotors bestimmt werden.

Verliert die Wegstreckenmessung ihre Fähigkeit zur Selbstkorrektur, beispielsweise dadurch, daß die Zählfehler des Inkrementalgebers eine obere Toleranzgrenze überschreiten, kann der Stellantrieb durch einmaliges Anfahren eines Endanschlages sich wieder selbst referenzieren, d.h. sich seinen Referenzpunkt erneut besorgen.

Wird bei Betrieb des Stellantriebs ein Hindernis erkannt und kehrt der Stellantrieb daraufhin seine Bewegungsrichtung um, dann kann er sich ebenfalls wieder selbst referenzieren, um eventuelle Zählfehler zu korrigieren, die sonst zur irrtümlichen Hinderniserkennung am anderen Endanschlag führen können.

Die Erfindung ermöglicht in vorteilhafter Weise erhebliche Einsparungen an Aufwand und Kosten bei gleichzeitiger Gewährleistung von Sicherheit, Zuverlässigkeit und vereinfachter Montage. Sie ist daher in der Lage, wesentlich zur Kundenzufriedenheit beizutragen.

## Patentansprüche

1. Verfahren zur Einstellung mindestens einer Endlage von einem durch einen Elektromotor angetriebenen Stellantrieb, insbesondere für ein Garagentor, wobei eine inkrementale Wegstreckenmessung vorgesehen ist, um den Motor bei Erreichen der eingestellten Endlagen durch eine Überlastabschaltung abzuschalten, und wobei der Motor zur Findung und Einstellung der Endlage in die entsprechende Richtung bis zum Endanschlag verfahren wird,
**dadurch gekennzeichnet, daß**
der Motor nach dem lastabhängigen Anhalten an zumindest dem einen Endanschlag um eine minimale Wegstrecke in umgekehrter Richtung zur Festlegung der Endlage zurückgefahren wird, und daß dieser dann erreichte Lagewert als Endlage abgespeichert wird, und die abgespeicherte Endlage den Wert des Stellantriebs bestimmt.

2. Verfahren nach Anspruch 1, **dadurch gekennzeichnet, daß** das Zurückfahren an beiden Endanschlägen durchgeführt wird.

3. Verfahren nach Anspruch 1 oder 2, **dadurch gekennzeichnet, daß** die nach dem Zurückfahren erreichten Werte für die Endlage manuell bestätigt werden.

4. Verfahren nach einem der vorigen Ansprüche, **dadurch gekennzeichnet, daß** die nach dem Zurückfahren erreichten Werte für die Endlage manuell korrigierbar sind.

5. Verfahren nach einem der vorigen Ansprüche, **dadurch gekennzeichnet, daß** eine Neueinstellung der Endlage bei Verlust der Selbstkorrektur der Wegstreckenmessung vorgenommen wird, wozu das Anfahren an einen Endanschlag durchgeführt wird.

6. Verfahren nach einem der vorigen Ansprüche, **dadurch gekennzeichnet, daß** eine Neueinstellung der Endlage dann vorgenommen werden kann, wenn bei Erkennung eines Hindernisses und entsprechendem Umsteuern eine Neujustage erforderlich ist, wozu das Anfahren an einen Endanschlag durchgeführt wird.

7. Verfahren nach einem der vorigen Ansprüche, **dadurch gekennzeichnet, daß** die Wegstreckenmessung mit einem rotierenden Inkrementalgeber versehen ist, der neben den Wegzählsignalen bei jeder Umdrehung zumindest ein sich davon unterscheidendes Referenzsignal abgibt.

8. Verfahren nach Anspruch 7, **dadurch gekennzeichnet, daß** bei mehreren Referenzsignalen die einzelnen Referenzsignale signifikante Unterschiede aufweisen, insbesondere unterschiedliche Länge.

9. Verfahren nach Anspruch 7 oder 8, **dadurch gekennzeichnet, daß** aus mehreren Referenzsignalen Informationen über die Drehrichtung ermittelt werden.

## Claims

1. A method of setting at least one end position of an actuator driven by an electric motor, in particular for a garage door, wherein an incremental distance measurement is provided in order to switch the motor off by means of an overload switch when the set end positions have been reached, and wherein the motor, in order to find and set the end position, is moved in the corresponding direction as far as the end stop, **characterised in that** the motor, after the load-dependent halt at at least one end stop, is moved back by a minimal distance in the opposite direction in order to determine the end position, and **in that** this positional value then obtained is stored as an end position, and the stored end position determines the value of the actuator.

2. A method according to claim 1, **characterised in that** the return movement is carried out at both end stops.

3. A method according to claim 1 or 2, **characterised in that** the values for the end position, obtained after the return movement, are manually confirmed.

4. A method according to any one of the preceding claims, **characterised in that** the values for the end position, obtained after the return movement, are manually correctable.

5. A method according to any one of the preceding claims, **characterised in that** the end position is reset in the event of loss of self-correction of the distance measurement, for which purpose movement towards an end stop is carried out.

6. A method according to any one of the preceding claims, **characterised in that** the end position can be reset when readjustment is necessary in the event of detection of an obstacle and corresponding reversal, for which purpose movement towards an end stop is carried out.

7. A method according to any one of the preceding claims, **characterised in that** the distance measurement is provided with a rotating incremental transmitter which, in addition to the distance metering signals, emits at least one reference signal differing therefrom during each rotation.

8. A method according to claim 7, **characterised in that**, in the case of a plurality of reference signals, the individual reference signals have significant differences, in particular different lengths.

9. A method according to claim 7 or 8, **characterised in that** information relating to the direction of rotation is determined from a plurality of reference signals.

## Revendications

1. Procédé de réglage d'au moins une position de fin de course d'un actionneur entraîné par un moteur électrique, en particulier pour une porte de garage, selon lequel une mesure incrémentale du trajet parcouru permet de couper le moteur par une coupure de surcharge lorsque l'on atteint la position de fin de course réglée, en mettant le moteur en marche pour trouver et régler la position de fin de course dans la direction correspondante jusqu'en butée de fin de course,
**caractérisé en ce que**
le moteur, après s'être arrêté en fonction de la charge au moins au niveau de la première butée de fin de course, revient sur un trajet minimal dans la direction inverse pour déterminer la position de fin de course, et la valeur de position alors obtenue est enregistrée en tant que position de fin de course, cette position de fin de course enregistrée déterminant la valeur de l'actionneur.

2. Procédé selon la revendication 1,
**caractérisé en ce que**
le trajet de retour est réalisé au niveau des deux butées de fin de course.

3. Procédé selon la revendication 1 ou 2,
**caractérisé en ce que**
les valeurs obtenues pour la position de fin de course après le trajet de retour sont confirmées manuellement.

4. Procédé selon l'une des revendications précédentes,
**caractérisé en ce que**
les valeurs obtenues pour la position de fin de course après le trajet de retour peuvent être corrigées manuellement.

5. Procédé selon l'une des revendications précédentes,
**caractérisé en ce qu'**
un nouveau réglage de la position de fin de course est effectué lorsque l'on perd la correction automatique de la mesure du trajet parcouru, et l'on effectue pour cela un déplacement contre une butée de fin de course.

6. Procédé selon l'une des revendications précédentes,
**caractérisé en ce qu'**
un nouveau réglage de la position de fin de course peut être réalisé lorsque, après détection d'un obstacle et transformation correspondante de la commande, un nouvel ajustage est nécessaire, et l'on effectue pour cela un déplacement contre une butée de fin de course.

7. Procédé selon l'une des revendications précédentes,
**caractérisé en ce que**
la mesure du trajet parcouru est pourvue d'un capteur incrémental rotatif qui, outre les signaux de comptage du trajet, émet également à chaque rotation au moins un signal de référence différent.

8. Procédé selon la revendication 7,
**caractérisé en ce que**
dans le cas de plusieurs signaux de référence, les signaux de référence individuels présentent des différences importantes, en particulier des longueurs différentes.

9. Procédé selon la revendication 7 ou 8,
**caractérisé en ce qu'**
à partir de plusieurs signaux de référence, des informations relatives à la direction de rotation sont déterminées.
